# FASCICULE DE BREVET EUROPEEN

(11) **EP 2 393 604 B1**
(45) Date de publication et mention de la délivrance du brevet: **27.09.2017**
(21) Numéro de dépôt: 10708301.6
(22) Date de dépôt: 08.02.2010
(51) Int. Cl.: B05B 5/04, G01P 3/44

(54) **PROJECTEUR ÉLECTROSTATIQUE COMPORTANT UN DISPOSITIF DE DÉTECTION DE VITESSE DE ROTATION**
ELEKTROSTATISCHE SPRÜHVORRICHTUNG MIT EINER VORRICHTUNG ZUR DREHZAHLERFASSUNG
ELECTROSTATIC PROJECTOR COMPRISING A ROTATION SPEED DETECTION DEVICE

(30) Priorité: 09.02.2009 FR 0950797
(43) Date de publication de la demande: 14.12.2011
(73) Titulaire: SAMES KREMLIN, 38240 Meylan (FR)
(72) Inventeur: PRAVERT, Christophe, F-38000 Grenoble (FR)
(74) Mandataire: Lavoix
(86) Numéro de dépôt international: PCT/FR2010/050201
(87) Numéro de publication internationale: WO 2010/089519

(56) Documents cités:
- GB-A- 2 068 152
- US-A- 4 361 288
- US-A1- 2006 175 439

## Description

La présente invention concerne un projecteur électrostatique de produit de revêtement comportant un dispositif de détection pour évaluer la vitesse de rotation d'un organe de projection appartenant au projecteur électrostatique.

La pulvérisation conventionnelle au moyen d'un projecteur électrostatique est utilisée pour appliquer un produit de revêtement sur des objets à revêtir, tels que des carrosseries de véhicule automobile. Par produit de revêtement, on entend tout produit destiné à être projeté sur un objet à revêtir sous forme pulvérulente ou sous forme liquide, par exemple un apprêt, une peinture, un vernis, etc.

Pour projeter un produit de revêtement pulvérulent ou liquide, il est connu d'utiliser un projecteur électrostatique comportant un organe de projection du produit de revêtement, qui est mobile en rotation par rapport au corps fixe du projecteur. Un tel organe de projection, généralement en forme de coupelle ou de bol, permet de projeter un jet de produit de revêtement avec une répartition uniforme et de conférer une charge électrique élevée aux particules ou aux gouttelettes du produit de revêtement ainsi projeté.

Pour assurer une qualité et une efficacité de projection constante et répétable, il faut réguler, donc mesurer, la vitesse de rotation de l'organe de projection. La régulation de la vitesse de l'organe de projection consiste à modifier la consigne envoyée aux moyens d'entraînement en rotation en fonction de la comparaison de cette consigne avec la vitesse de rotation mesurée.

FR-A-2 493 398 décrit un projecteur électrostatique comportant des moyens pour élever le potentiel du produit de revêtement, une turbine à air pour entraîner en rotation l'organe de projection, ainsi qu'un dispositif pour évaluer la vitesse de rotation de l'organe de projection à partir de la différence entre la pression d'entrée et la pression de sortie de cette turbine à air. Les mesures de la vitesse de rotation fournies par un tel dispositif ne sont pas précises, car de nombreux paramètres influencent la pression d'entrée et la pression de sortie de cette turbine à air, par exemple un bouchage partiel du conduit d'entrée ou de sortie.

Par ailleurs, pour évaluer la vitesse de rotation de l'organe de projection, il est connu d'employer un dispositif de détection comprenant un microphone comme capteur et une cible disposée sur un composant rotatif du projecteur de façon à générer des impulsions de pression d'air. Le microphone réagit à chaque impulsion, donc à chaque tour parcouru par la cible, en générant des signaux électriques, lesquels sont ensuite comptabilisés pour déterminer la vitesse de rotation. Un tel dispositif de détection requiert des usinages et un assemblage précis, donc coûteux, des composants intervenant dans cette détection.

En outre, il faut relier le projecteur électrostatique à une source d'alimentation en air comprimé et prévoir un conduit de retour du signal pneumatique jusqu'au microphone, ce qui augmente l'encombrement radial du projecteur au niveau de son plan de pose où se trouvent les connecteurs nécessaires à l'alimentation du projecteur. De plus, cette source d'air comprimé consomme de l'énergie en permanence. Par ailleurs, il est souvent nécessaire d'effectuer un traitement du signal délivré par le microphone pour réduire les bruits parasites.

FR-A-2 504 029 décrit un projecteur électrostatique pourvu d'un dispositif de détection optique de la vitesse de rotation de l'organe de projection rotatif. La détection optique met en oeuvre un émetteur-récepteur de lumière et une cible réfléchissante disposée sur un composant rotatif du projecteur. Un tel dispositif de détection nécessite une fibre optique pour émettre la lumière et une fibre optique pour recevoir les impulsions lumineuses réfléchies par la cible. Ces fibres optiques sont d'autant plus longues que cet émetteur-récepteur de lumière est généralement placé à distance de la cible.

Or, les fibres optiques sont fragiles et elles peuvent être rompues lorsqu'elles sont trop sollicitées en flexion et/ou en torsion, comme cela est fréquent pour un projecteur électrostatique monté sur le poignet d'un robot multiaxes. L'installation et la maintenance d'un tel dispositif de détection sont coûteuses.

GB-A-2 068 152 décrit un projecteur selon le préambule de la revendication 1 comportant un corps incorporant les moyens d'entraînement en rotation de l'organe de projection. Un capteur est monté à l'extérieur du corps et dans un logement formé par une paroi en matériau conducteur et reliée au potentiel de la terre. Ce logement formé par une paroi en

matériau conducteur doit être suffisamment éloigné des éléments à la haute tension afin d'éviter tout claquage, surconsommation ou étincelle, etc...

EP-A-0481247 décrit un projecteur électrostatique comportant un dispositif de détection comprenant un capteur magnétique et deux cibles constituées d'aimants disposés sur la roue de la turbine à air entraînant l'organe de projection en rotation. Le dispositif de détection comprend un capteur formé d'un solénoïde placé à proximité de la roue de turbine, de sorte que chaque passage d'un aimant-cible devant ce capteur génère une impulsion électrique dans le solénoïde. Le solénoïde du capteur transmet les impulsions électriques à une unité de comptage qui évalue la vitesse de rotation. Dans le cas d'un projecteur électrostatique, l'organe de projection et, généralement, certains composants de la turbine, par exemple la roue, sont sous haute tension. C'est pourquoi le solénoïde du capteur est relié à l'unité de comptage par l'intermédiaire d'un câble sous haute tension qui conduit les impulsions électriques ainsi que d'un solénoïde d'isolation influencé par le câble sous haute tension.

L'isolation du câble sous haute tension peut s'avérer insuffisante face aux perturbations électromagnétiques externes, ce qui risquerait d'induire des signaux parasites au niveau de l'unité de comptage, faussant ainsi l'évaluation de la vitesse de rotation. En outre, le câble sous haute tension forme une capacité qui représente un danger pour les opérateurs lors de la maintenance du projecteur. Ce câble sous haute tension est en outre encombrant et difficile à monter et à manipuler. De plus, un tel dispositif de détection est relativement coûteux, car il faut deux solénoïdes, dont celui du capteur qui a une structure spécifique, et un câble sous haute tension. Par ailleurs, un tel projecteur présente des risques accrus de générer des arcs électriques entre une partie du câble sous haute tension et le plan de pose du projecteur ou un câble d'alimentation sous moyenne tension.

La présente invention vise notamment à remédier à ces inconvénients, en proposant un projecteur électrostatique équipé d'un dispositif de détection précis, fiable, robuste, inoffensif, de construction simple et de coût modéré.

A cet effet, l'invention a pour objet un projecteur de produit de revêtement liquide ou pulvérulent par voie électrostatique, tel que défini à la revendication 1.Ainsi, le capteur et une partie du câble de liaison sont isolés et protégés de la haute tension et donc des risques de claquage sur les parties du capteur qui sont elles reliées à la basse tension.

Des caractéristiques avantageuses mais facultatives de l'invention, prises isolément ou selon toute combinaison techniquement admissible, sont définies aux revendications 2 à 12.

L'invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en coupe d'un projecteur conforme à l'invention ;
- la figure 2 est une vue à plus grande échelle du détail II à la figure 1 ;
- la figure 3 est une vue analogue à la figure 1 pour une variante de projecteur ; et
- la figure 4 est une vue à plus grande échelle du détail IV à la figure 3.

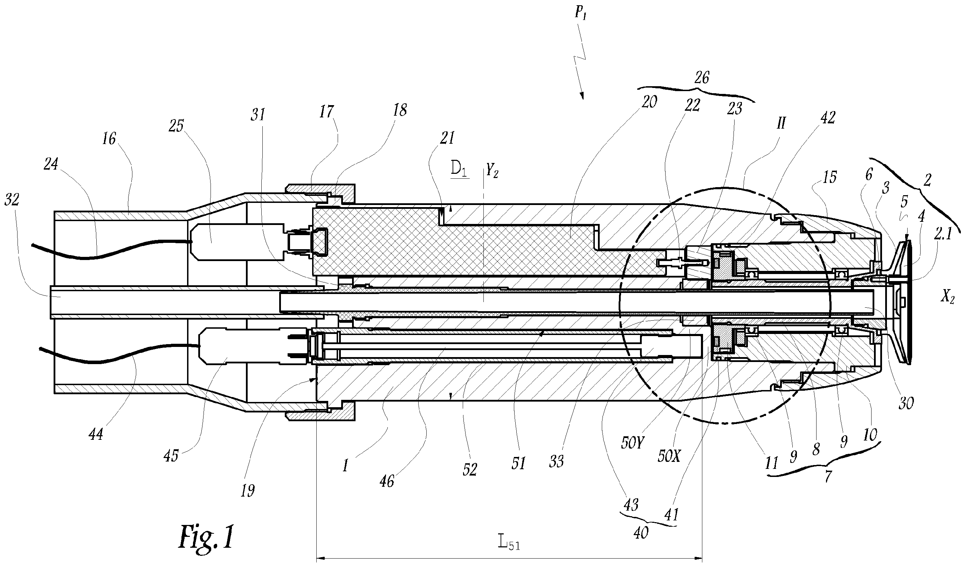

La figure 1 montre un projecteur P₁ comportant un corps 1 et un organe de projection 2 pour projeter un produit pulvérulent destiné à revêtir un objet tel qu'une carrosserie automobile.

L'organe de projection 2 comprend une coupelle 3 et un disque 4 qui sont solidaires et qui définissent ensemble un interstice d'éjection 5 pour l'éjection du produit pulvérulent. L'organe de projection 2 comprend également une embase 6, sur laquelle sont fixés la coupelle 3 et le disque 4. L'organe de projection 2 est monté au niveau de l'extrémité aval du projecteur P₁.

Plus précisément, l'embase 6 est fixée sur l'extrémité aval d'un arbre 8 appartenant à une turbine 7. L'arbre 8 est supporté par des roulements 9 dans un carter 10 de la turbine 7. Le carter 10 de la turbine 7 est solidarisé à la partie aval du corps 1 au moyen d'un écrou 15. La turbine 7 comprend en outre une roue à aubes 11 qui est solidarisée à la portion amont de l'arbre 8. Le corps 1 capote une partie substantielle du carter 10. Les termes « amont » et « aval » sont employés ici en référence au sens général d'écoulement du produit de revêtement à travers le projecteur P₁.

La turbine 7 comprend aussi des canaux non représentés agencés pour diriger de l'air comprimé sur les aubes de la roue à aubes 11. En fonctionnement, l'air comprimé injecté sur les aubes entraîne la roue à aubes 11 en rotation, ainsi que l'arbre 8 et l'organe de projection 2, autour d'un axe de rotation X₂. La turbine 7 forme ainsi des moyens d'entraînement de l'organe de projection 2 en rotation autour de l'axe X₂.

Au cours de la projection par un projecteur électrostatique de produit de revêtement pulvérulent, la vitesse de rotation de l'organe de projection est généralement comprise entre 5 000 trs/min et 10 000 trs/min. Au cours de la projection par un projecteur électrostatique de produit de revêtement liquide, la vitesse de rotation de l'organe de projection est généralement comprise entre 35 000 trs/min et 80 000 trs/min.

Le projecteur P₁ peut être fixé sur un poignet 16 d'un bras de robot multiaxes destiné à déplacer le projecteur P₁ par rapport à un objet à revêtir. En pratique, le projecteur P₁ est équipé d'un écrou 17 qui immobilise un épaulement amont 18 du corps 1 contre le poignet 16. La surface axiale amont du corps 1 définit un plan de pose 19 qui forme l'interface avec le poignet 16.

Le projecteur P₁ comporte en outre des moyens d'alimentation électrique 26 pour élever à haute tension le potentiel de l'organe de projection 2. Dans la présente demande, les termes « potentiel », « tension » et « courant » désignent respectivement un potentiel électrique, une tension électrique et un courant électrique. De même, l'adjectif « conducteur » et les verbes « conduire », « relier » et « connecter » se rapportent à la conduction d'électricité soit au moyen d'un conducteur solide ou liquide, soit au moyen de deux pièces en contact et en mouvement relatif, soit par influence.

Les moyens d'alimentation électrique 26 comprennent une unité haute tension 20 qui est disposée dans une chambre 21 de forme complémentaire et ménagé au sein du corps 1. L'unité haute tension 20 est alimentée en puissance électrique au moyen d'un câble de puissance 24 qui est monté sur un connecteur de puissance 25 lui-même branché sur l'unité haute tension 20 au niveau du plan de pose 19. Selon une variante non représentée, l'unité haute tension peut être déportée hors du projecteur. Dans une telle variante, un câble sous haute tension est agencé entre l'unité haute tension et l'intérieur du projecteur. Un tel câble sous haute tension constitue ainsi des moyens d'alimentation électrique pour élever à haute tension le potentiel de l'organe de projection.

L'unité haute tension 20 et l'organe de projection 2 sont reliés électriquement par des éléments conducteurs. La sortie de l'unité haute tension 20 est en contact avec un pion 22 qui est lui-même enfiché dans un siège 23 en matériau conducteur. Le siège 23 est électriquement connecté à l'arbre 8, donc à l'organe de projection 2, par l'intermédiaire d'un anneau 33.

Le pion 22, le siège 23, l'anneau 33, l'arbre 8 et l'embase 6 sont des éléments dits « conducteurs », car ils sont réalisés en matériaux conducteurs. L'organe de projection 2 comprend d'autres éléments conducteurs, par exemple un pion 2.1 et le disque 4 pour charger les particules de produit avant leur sortie par l'interstice d'éjection 5. L'organe de projection 2 comprend aussi une électrode, pour porter à haut potentiel les particules ou les gouttelettes de produit de revêtement. Une telle électrode forme aussi un élément conducteur. Dans l'exemple des figures 1 à 4, l'électrode peut être constituée par le disque 4. Par ailleurs, le carter 10 et la roue à aubes 11 sont ici réalisés en matériaux isolants. Alternativement, le carter 10 et la roue à aubes 11 peuvent être faits de matériaux conducteurs.

Ces éléments conducteurs sont directement ou indirectement reliés à l'unité haute tension 20 et ils font partie de l'organe de projection 2, de la turbine 7 ou des moyens d'alimentation électrique 26. Le potentiel électrique de chacun de ces éléments conducteurs est susceptible d'être élevé à haute tension continue, typiquement comprise entre 10 kV et 100 kV.

Pour alimenter l'organe de projection 2 en produit de revêtement pulvérulent, le projecteur P₁ comporte un tube 30 à base circulaire. Le tube 30 s'étend de façon coaxiale à l'axe X₂ et à travers le corps 1 et la turbine 7. L'extrémité amont du tube 30 comprend un raccord 31 emmanché dans un tuyau 32. Le tuyau 32 s'étend dans le poignet 16 de façon à amener le produit de revêtement jusqu'au projecteur P₁ depuis un réservoir non représenté. L'extrémité aval du tube 30 débouche dans un alésage cylindrique de l'embase 6 de l'organe de projection 2.

Par ailleurs, le projecteur P₁ comporte un dispositif de détection 40 pour évaluer la vitesse de rotation de l'organe de projection 2. Le dispositif de détection 40 comprend deux cibles 41 et 42 disposées sur la roue à aubes 11, ainsi qu'un capteur 43 fixé dans le corps 1 du projecteur P₁.

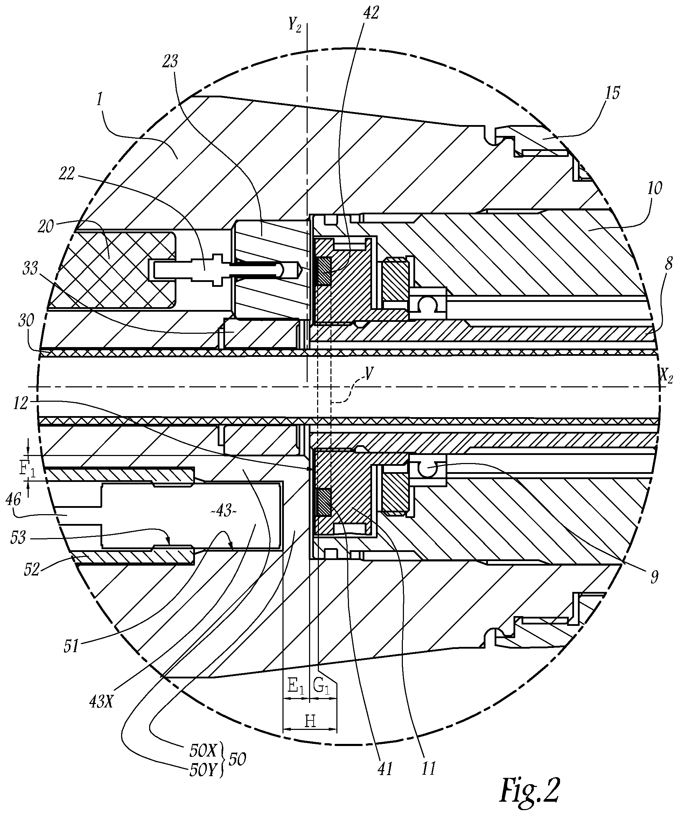

Comme le montre la figure 2, chaque cible 41 ou 42 est formée d'un plot intégré à la roue à aubes 11. En pratique, chaque cible 41 ou 42 est logée dans un alésage respectif de forme correspondante réalisé dans la roue à aubes 11 de façon à déboucher sur une surface axiale amont 12 de la roue à aubes 11. Les cibles 41 et 42 sont disposées à la même distance radiale de l'axe X₂ et elles occupent des positions diamétralement opposées, de façon à équilibrer la roue à aubes 11 par compensation mutuelle des inerties des cibles 41 et 42 en rotation.

Dans la présente demande, une direction ou une distance est qualifiée d'« axiale » ou de « radiale » respectivement selon qu'elle est parallèle ou perpendiculaire à l'axe X₂. Dans la présente demande, une surface est qualifiée d'« axiale » ou de « radiale » en fonction de la direction que suit une normale à cette surface. Une surface axiale est donc globalement perpendiculaire à l'axe X₂.

En pratique, les cibles 41 et 42 présentent chacune une forme cylindrique et elles sont fixées sur la roue à aubes 11 par collage, par emmanchement à force ou par tout autre moyen de maintien en position équivalent.

Chaque cible 41 et 42 est constituée d'un aimant permanent, tandis que la roue à aubes 11 est constituée d'un matériau amagnétique ou à faible permittivité magnétique. En pratique, chaque cible 41 et 42 peut être constituée d'un matériau ferromagnétique ou ferrimagnétique. Chaque cible 41 ou 42 forme donc une discontinuité de matière et de propriété physique. De préférence, chaque cible 41 et 42 est constituée d'une terre rare ou d'un autre matériau à forte permittivité magnétique, ce qui permet un encombrement relativement faible pour chaque cible 41 ou 42 tout en générant un champ magnétique relativement puissant et détectable. Le champ magnétique de chaque cible 41 ou 42 est orienté parallèlement à l'axe X₂. La polarité de chaque cible 41 ou 42 est orientée en fonction du sens de détection du capteur 43.

Le capteur 43 est ici de type capteur à effet Hall. Plus généralement, le capteur détectant les cibles peut être de type actif ou passif, selon la nature de cible à détecter. Le capteur 43 peut être sélectionné dans le groupe constitué d'un capteur magnétique, d'un capteur magnéto-résistif, d'un capteur à effet Hall, d'un capteur inductif, d'un capteur magnéto-inductif et d'un capteur capacitif.

Un capteur ainsi sélectionné permet de détecter les cibles à haute comme à basse vitesse de rotation. Il ne nécessite pas d'air comprimé, ce qui économise l'énergie, et il est insensible aux pollutions éventuelles de la zone de détection par le produit de revêtement. De plus, un tel capteur est compact. Ce capteur est sélectionné avec une portée de détection importante, ce qui permet de prévoir une paroi isolante relativement épaisse.

De plus, un tel capteur doit travailler à haute fréquence, ce qui permet de détecter des vitesses de rotation élevées. Pour mesurer les vitesses de rotation élevées telles que mentionnées ci-dessus, le capteur sélectionné doit être adapté pour opérer une détection de cible à haute fréquence, de l'ordre de plusieurs kHz.

Suivant une direction radiale, le capteur 43 est disposé dans le projecteur P₁ approximativement à la même distance radiale de l'axe X₂ que chacune des cibles 41 et 42. Suivant une direction axiale, le capteur 43 est disposé dans le projecteur P₁ à une distance de détection H du volume V balayé ou parcouru par les cibles 41 et 42 lors de leur rotation autour de l'axe X₂. Le volume V est représenté en traits pointillés à la figure 2. Le volume V présente donc une forme annulaire coaxiale à l'axe X₂. La distance de détection H, mesurée parallèlement à l'axe X₂, vaut ici environ 6 mm. En pratique, en fonction de la sensibilité du capteur employé, la distance de détection est déterminée de sorte que le capteur détecte une fois chaque cible au cours de chaque révolution de chaque cible.

En fonctionnement, le potentiel du capteur 43 est porté à une tension basse ou nulle s'il est relié à la masse. Le capteur 43 est isolé par rapport aux éléments conducteurs du projecteur P₁, à savoir notamment l'organe de projection 2, la pièce 33, l'arbre 8, les cibles 41 et 42, lesquels ont un potentiel porté à haute tension.

Dans la présente demande, les termes « isoler », « isolant » et « isolation » se rapportent à la propriété d'isolation électrique qui empêche ou limite fortement la conduction d'électricité.

Pour isoler le capteur 43 de ces éléments conducteurs, le projecteur P₁ comprend en outre une paroi 50 qui est formée par une partie du corps et qui définit un logement 51 pour le capteur 43. Le corps 1 capote le logement 51 et donc la paroi 50. Le corps 1 et, par conséquent, la paroi 50 sont réalisés en un ou plusieurs matériau(x) isolant(s). En d'autres termes, la paroi 50 est venue de matière avec le corps 1 dont elle fait partie intégrante. En pratique, les matériaux formant le corps 1 et la paroi 50 sont sélectionnés dans le groupe constitué du polyoxyméthylène copolymère (POM C), du polyéthylène téréphtalate (PETP), du polychlorure de vinyle (PVC), du polyéthylène (PE), du polypropylène (PP), du polyétheréthercétone (PEEK), du polytétrafluoréthylène (PTFE).

Le logement 51 s'étend, suivant une direction parallèle à l'axe X₂, depuis le plan de pose 19 jusqu'à la région de détection située un peu en amont du volume V. Le logement 51 présente une forme cylindrique. Le logement 51 est composé d'une partie aval, définie par la paroi 50, qui loge le capteur 43, ainsi que d'une partie amont qui loge un câble de liaison 46 par lequel circulent le courant d'alimentation du capteur 43 ainsi que les signaux électriques générés par le capteur 43 lorsque les cibles 41 et 42 sont en rotation. Au niveau du plan de pose 19, le câble de liaison 46 est relié à un connecteur de signal 45 lui-même relié à un câble de signal 44 qui s'étend dans le poignet 16, jusqu'à une unité de traitement du signal non représentée.

Comme le montre la figure 2, le logement 51 entoure le capteur 43 et une partie de son câble de liaison 46. La totalité du capteur 43 est ainsi isolée des éléments conducteurs du projecteur P₁, lesquels sont disposés essentiellement en aval du capteur 43. Ainsi, le capteur 43 et une partie du câble de liaison 46 sont isolés et protégés de la haute tension et donc des risques de claquage sur les parties du capteur qui sont elles reliées à la basse tension.

Comme la partie aval du logement 51 est ajustée, au jeu de montage près, autour du d'un partie du capteur 43, le positionnement du capteur 43 dans le logement 51 est aisé à effectuer.

Comme le montre la figure 2, pour mettre en place le capteur 43 au sein et à l'extrémité du logement 51, le capteur 43 est préalablement vissé à l'extrémité d'un fourreau 52. Le fourreau 52 a une forme de tube débouchant à chacune de ses extrémités. Le fourreau 52 est rigide, ce qui permet de tenir le capteur 43 et de l'enfiler jusqu'à sa position de détection à l'extrémité aval du logement 51. Le fourreau 52 à une forme tubulaire qui coïncide avec la surface radiale cylindrique du logement 51, ce qui permet le passage du câble de liaison 46 à l'intérieur et le long du fourreau 52.

Une portion axiale 50X de la paroi 50 s'étend, d'une part, en regard du capteur 43 et, d'autre part, en regard du volume V. La portion axiale 50X s'étend donc globalement radialement. La portion axiale 50X est disposée axialement entre le capteur 43 et le volume V. En d'autres termes, la portion axiale 50X de la paroi 50 est disposée, suivant une direction parallèle à l'axe X₂, entre la surface axiale aval du logement 51 et la surface amont du carter 10. La portion axiale 50X de la paroi 50 et le volume V sont séparés par une distance axiale G₁ d'environ 1 mm. En pratique, la distance axiale G₁ est comprise entre 1 mm et 10 mm. Le capteur 43 doit avoir une distance de détection H supérieure à la somme de l'épaisseur axiale de la paroi 50X et de la distance axiale G₁.

En pratique, la portion axiale 50X de la paroi 50 a une épaisseur E₁ d'environ 5 mm, pour isoler efficacement, compte tenu des matériaux employés pour réaliser la paroi 50, le capteur 43 de la haute tension mise en oeuvre. En pratique, l'épaisseur E₁ est choisie supérieure à 5 mm.

Par ailleurs, une portion radiale 50Y de la paroi 50 s'étend entre la surface cylindrique du logement 51 et l'axe X₂. La partie la plus fine de la portion radiale 50Y de la paroi 50 s'étend entre la surface cylindrique de la partie aval du logement 51 et une surface radiale de l'anneau 33. Cette partie la plus fine de la portion radiale 50Y de la paroi 50 a une épaisseur F₁ d'environ 5 mm.

Ainsi, le capteur 43 peut être monté à proximité des cibles 41 et 42 à la distance d'isolation près. Cet agencement représente une compacité élevée suivant la direction radiale Y₂, ce qui limite l'encombrement du projecteur P₁.

Les épaisseurs E₁ et F₁ respectives des portions axiale 50X et radiale 50Y de la paroi 50 sont déterminées en fonction de la permittivité diélectrique du matériau formant la paroi isolante et en fonction de la différence de potentiel prévue entre le capteur 43, qui est porté à tension basse ou nulle, et les éléments conducteurs du projecteur P₁, dont les potentiels sont portés à haute tension.

De plus, le logement 51 a une longueur L₅₁, mesurée suivant l'axe X₂, d'environ 100 mm à 150 mm pour une haute tension de 50 kV à 100 kV. La longueur L₅₁ est essentiellement déterminée en fonction de l'éloignement nécessaire entre le plan de pose 19 et les éléments conducteurs.

En fonctionnement, lors de la projection électrostatique, le produit de revêtement pulvérulent est transporté par voie pneumatique jusqu'à l'organe de projection 2 à travers le tuyau 32 puis le tube 30. D'amont en aval, le produit de revêtement s'écoule donc dans le projecteur P₁ depuis le plan de pose 19 jusqu'à l'organe de projection 2.

L'unité haute tension 20 est alimentée en puissance électrique et pilotée par le câble de puissance 24 et par le connecteur de puissance 25. Les moyens d'alimentation électrique 26 élèvent alors les potentiels des éléments conducteurs du projecteur P₁ à haute tension, notamment les potentiels du pion 22, du siège 23, de l'anneau 33, de l'arbre 8, de l'embase 6, du pion 2.1 et du disque 4. Le produit pulvérulent circule ensuite le long de la coupelle 3 depuis l'embase 6 jusqu'à l'interstice d'éjection 5, où chacune de ses particules accumule une charge électrostatique.

Le capteur 43 génère une variation de signal exploitable à chaque passage d'une cible 41 ou 42 à proximité de ses organes de détection. Ces variations de signal, ou impulsions électriques, ainsi générées par le capteur 43 circulent dans le câble de liaison 46, puis dans le connecteur de signal 45 et dans le câble de signal 44 et jusqu'à une unité de comptage non représentée. L'unité de comptage est associée à un circuit électronique qui détermine la vitesse de rotation de l'organe de projection 2 à partir de ces variations de signal.

L'emploi d'un capteur mettant en oeuvre l'effet Hall permet de remplir la fonction de détection en augmentant la précision sur la mesure de la vitesse de rotation, car il génère des variations de signal distinctes de manière fiable et répétable.

De plus, l'agencement suivant la direction axiale du capteur 43 et des cibles 41 et 42 limite sensiblement les dimensions radiales du corps 1, c'est-à-dire ses dimensions dans un plan orthogonal à l'axe X₂. Ainsi, le corps 1, globalement cylindrique, présente un diamètre D₁ d'environ 100 mm, alors que la dimension radiale du capteur 43, prise suivant une direction Y₂ orthogonale à l'axe X₂, vaut environ 10 mm.

Le rapport entre la dimension radiale du capteur 43 et le diamètre D₁ du corps 1, vaut environ 10%. Le capteur 43 induit donc le cas échéant un faible supplément pour l'encombrement radial du projecteur P₁. Or, l'encombrement radial du projecteur P₁ conditionne directement l'accès du projecteur P₁ dans des volumes réduits comme pour revêtir les surfaces intérieures d'une carrosserie automobile, ainsi que l'accès à travers une ouverture d'une cabine de pulvérisation.

Par ailleurs, dans le cas du projecteur P₁, il est possible de réaliser le fourreau 52 en un matériau conducteur, dans le cas où il est nécessaire de relier à la masse la surface externe du capteur 43 de façon à éviter les perturbations électromagnétiques générées par les éléments conducteurs et par les moyens d'alimentation électrique 26 incorporés dans le projecteur P₁.

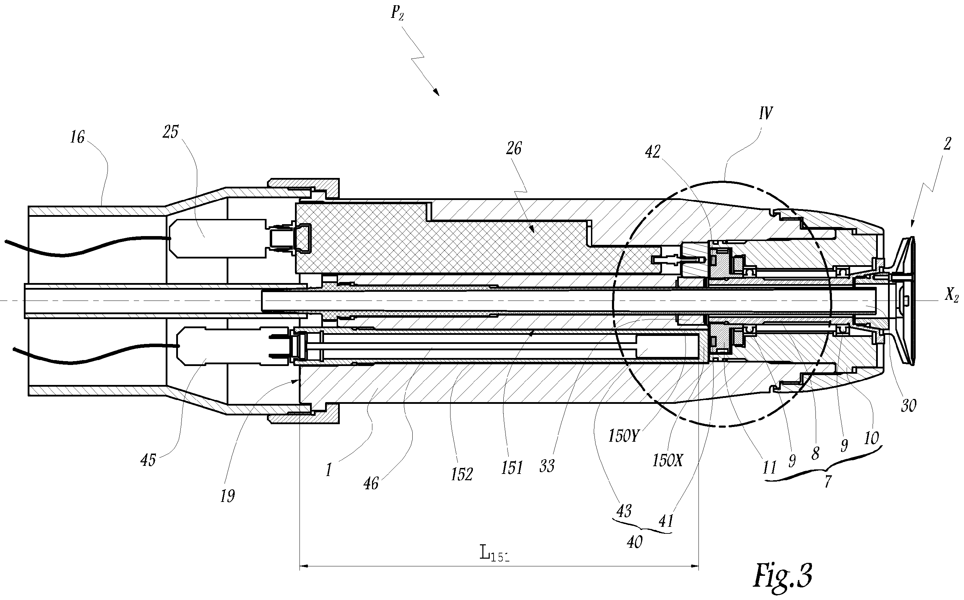

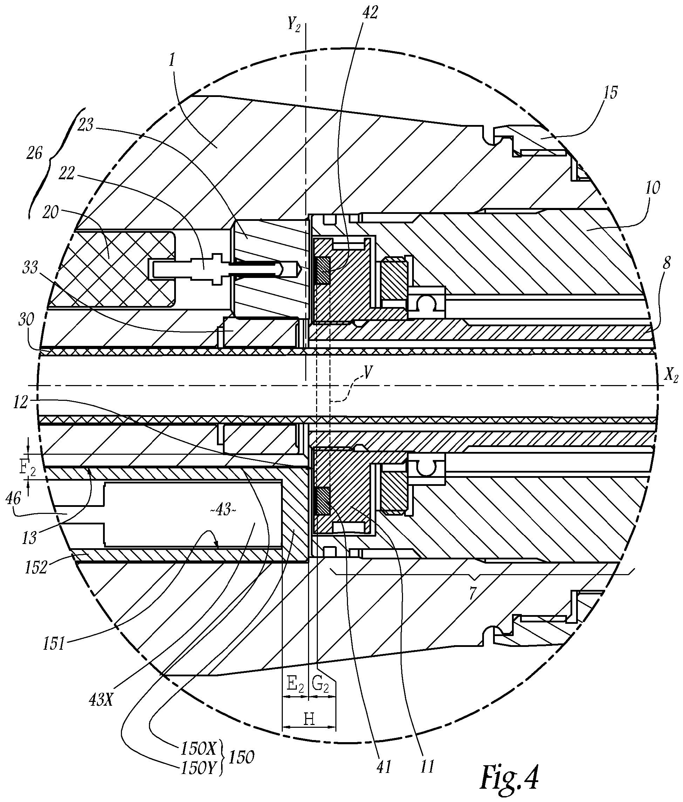

Les figures 3 et 4 illustrent une variante de projecteur P₂. La description du projecteur P₁, donnée ci-dessus en relation avec les figures 1 et 2, peut être transposée au projecteur P₂ illustré aux figures 3 et 4, à l'exception des différences énoncées ci-après. Des éléments du projecteur P₂ semblables ou correspondants à ceux du projecteur P₁ portent les mêmes références numériques. On définit ainsi le corps 1, l'organe de projection 2 et son axe de rotation X₂, la turbine 7, le poignet de robot 16, le plan de pose 19, le connecteur de puissance 25 et le connecteur de signal 45, les moyens d'alimentation électrique 26, le tube 30, les cibles 41 et 42 ainsi que le capteur 43.

Le projecteur P₁ diffère du projecteur P₂ par la structure et l'agencement de la paroi 50 et du logement 51 qui isole le capteur 43 par rapport aux éléments conducteurs du projecteur P₁. A la différence de la paroi 50 du projecteur P₁ qui est formée par une partie du corps 1, le projecteur P₂ comporte une paroi 150 qui est formée par un fourreau 152 en forme de tube non débouchant du côté aval, où il est obturé par un disque venu de matière avec le tube. Le fourreau 152 est rapporté dans un alésage cylindrique 13 réalisé dans le corps 1 et visible à la figure 4.

La paroi 150 du fourreau 152 définit un logement 151 qui entoure le capteur 43 et une partie de son câble de liaison 46. Le corps 1 capote en partie le fourreau 152 et donc partiellement le logement 151 et la paroi 150. Les portions axiale 150X et radiale 150Y de la paroi 150 sont formées respectivement par la partie axiale aval et la partie radiale cylindrique du fourreau 152. Cette construction du projecteur P₂ induit un usinage relativement simple du corps 1.

La longueur L₁₅₁ du logement 151 est choisie suffisamment grande pour éviter tout rampage ou propagation d'arc électrique à haute tension le long du fourreau 152 entre des éléments conducteurs sous haute tension et le câble de liaison 46 ou le plan de pose 19 et les connecteurs de puissance 25 ou de signal 45, étant donné qui sont reliés à la masse. Dans ce but, la longueur L₁₅₁ est supérieure à 150 mm pour des niveaux de tension compris entre 50 kV et 100 kV. En effet, un tel arc électrique risquerait de détériorer, voire de détruire, le référencement électrique du capteur 43.

Le fourreau 152 doit être réalisé en un matériau isolant, tel que le polyoxyméthylène copolymère (POM C). En pratique, les matériaux formant le fourreau 152 sont sélectionnés dans le groupe constitué du polyoxyméthylène copolymère (POM C), du polyéthylène téréphtalate (PETP), du polychlorure de vinyle (PVC), du polyéthylène (PE), du polypropylène (PP), du polyétheréthercétone (PEEK), du polytétrafluoréthylène (PTFE).

Dans le cas du projecteur P₂, il est préférable de minimiser le jeu entre le fourreau 152 et le corps 1, de façon à permettre le montage du fourreau 152 mais de façon à éviter la propagation d'arc électrique entre le fourreau 152 et le corps 1 jusqu'aux éléments conducteurs situés sur l'arrière du projecteur et portés à la basse tension ou au potentiel de la terre.

La portion axiale 43X du capteur 43, où se trouvent ses organes de détection, est disposée à la distance de détection H du volume V balayé par les cibles 41 et 42 en rotation autour de l'axe X₂. Le volume V est représenté en traits pointillés à la figure 4. Pour isoler le capteur 43 des éléments conducteurs du projecteur P₂, l'épaisseur E₂ de la portion axiale 150X de la paroi 150 vaut 5 mm. En pratique, l'épaisseur E₂ est supérieure à 3 mm. De même, l'épaisseur F₂ de la portion radiale 150Y de la paroi 50, c'est--à-dire l'épaisseur radiale du fourreau 152, vaut 5 mm. En pratique, l'épaisseur F₂ est supérieure ou égale à 3 mm.

La portion axiale aval 150X de la paroi 150 s'étend, d'une part, en regard du capteur 43 et, d'autre part, en regard du volume V. La portion axiale 150X de la paroi 150 est disposée, parallèlement à l'axe X₂, entre la surface axiale aval du logement 51 et la surface amont du carter 10. La portion axiale 150X de la paroi 50 et le volume V sont séparés par une distance axiale G₂ d'environ 1 mm. En pratique, la distance axiale G₂ est comprise entre 1 mm et 10 mm. Au lieu d'être plane, comme dans la variante illustrée aux figures 3 et 4, la portion axiale de la paroi 150 peut présenter des reliefs s'étendant en retrait ou en saillie par rapport à des composants de la turbine 7.

Les épaisseurs E₂ et F₂ sont déterminées en fonction de la permittivité diélectrique du matériau formant la paroi isolante et en fonction de la haute tension à laquelle est porté le potentiel des éléments conducteurs du projecteur P₂.

Dans le projecteur P₁ et dans le projecteur P₂, le capteur 43 et tout ou partie du câble de liaison sont intégralement isolés des éléments conducteurs portés à haute tension. En d'autres termes, tous les composants du capteur 43 et une partie du câble de liaison sont isolés de la haute tension et peuvent être portés à un potentiel bas ou nul, c'est-à-dire reliés à la masse.

L'isolation de la totalité du capteur 43 permet d'éviter toute conduction d'un arc électrique à travers les composants mêmes du capteur 43, afin de le protéger et de garantir la fonction de mesure de la vitesse de rotation. Or, un tel arc électrique pourrait être un point d'ignition dans une atmosphère explosible créée par le produit de revêtement. L'invention réalise donc un mode de protection en atmosphère explosible, qui est simple et économique en comparaison d'une barrière de sécurité intrinsèque.

Comme le capteur 43 est intégralement isolé des éléments conducteurs portés à haute tension, il peut être agencé au plus près des cibles 41 et 42. On peut ainsi employer un capteur relativement peu encombrant, moins sensible, non prévu pour résister aux hautes tensions, donc peu coûteux.

Dans le cas du projecteur P₁, l'utilisation d'un fourreau 52 métallique et relié à la masse forme un blindage du capteur 43 et du câble de liaison 46 vis-à-vis des fortes perturbations électromagnétiques environnantes.

Dans le cas du projecteur P₂, un tel blindage peut être prévu directement sur le capteur 43 et sur le câble de liaison 46.

Selon une variante non représentée, chaque cible est constituée d'une discontinuité de forme, tel qu'un creux ou un relief. Dans ce cas, le capteur peut être un capteur capacitif voire un capteur inductif si la discontinuité est en matériau conducteur.

Selon une autre variante non représentée, chaque cible est constituée d'une discontinuité de matière qui comprend une matière électriquement conductrice, au lieu d'une matière magnétique comme dans le cas du premier mode de réalisation. Dans ce cas, le capteur peut être inductif.

Selon une autre variante non représentée, chaque cible forme une discontinuité de propriété physique, qui peut être réalisée ou non dans le même matériau que la pièce sur laquelle elle est fixée. Le capteur est configuré pour détecter cette discontinuité de propriété physique, mais pas nécessairement pour résister aux hautes tensions.

Une telle discontinuité de propriété physique peut être par exemple formée par une variation d'état de surface. Au moins une cible est formée par une zone d'une pièce tournante qui est polie de façon à réfléchir les rayons lumineux émis par un émetteur-récepteur optique qui forme le capteur. L'émetteur-récepteur optique peut être constitué d'une barrière lumineuse.

Dans cette variante, la paroi électriquement isolante est réalisée en un matériau transparent. L'émetteur-récepteur optique est totalement entouré par cette paroi transparente, ce qui isole complètement les composants réalisant la détection de la cible et évite tout risque d'arc électrique vers ce capteur. Ainsi, L'émetteur-récepteur optique peut être installé au plus près de la cible, en particulier à distance de visée, ce qui nécessite peu ou pas de fibre optique.

Selon une autre variante non représentée, les moyens d'entraînement en rotation de l'organe de projection comprennent un moteur électrique au lieu d'une turbine à air.

Selon encore une autre variante non représentée, la paroi isolante peut être composée de plusieurs matériaux différents juxtaposés en strates.

Dans l'exemple des figures 1 à 2, l'invention a été décrite pour un projecteur électrostatique de produit de revêtement pulvérulent. Cependant, l'invention s'applique également aux projecteurs électrostatiques de produit de revêtement liquide. Les modifications structurelles pour adapter un projecteur électrostatique de produit pulvérulent à la projection de produit liquide sont usuelles et elles ne seront donc pas détaillées dans la présente demande.

## Revendications

1. Projecteur (P₁) de produit de revêtement liquide ou pulvérulent par voie électrostatique, comportant :
- un corps (1) électriquement isolant,
- un organe de projection (2) du produit de revêtement mobile en rotation par rapport au corps (1) et autour d'un axe de rotation (X₂),
- des moyens d'entraînement en rotation (7) de l'organe de projection (2),
- des moyens d'alimentation électrique (26) agencés pour élever à haute tension le potentiel de l'organe de projection (2) ;
- des éléments conducteurs (2.1, 6, 8, 9, 22, 23, 33) électriquement reliés aux moyens d'alimentation électrique (26) et qui appartiennent notamment à l'organe de projection (2), aux moyens d'entraînement en rotation (7) et aux moyens d'alimentation électrique (26), le potentiel des éléments conducteurs (2.1, 4, 6, 8, 9, 22, 23, 33) étant susceptible d'être élevé à haute tension ;
- un dispositif de détection (40) pour évaluer la vitesse de rotation de l'organe de projection (2), le dispositif de détection (40) comprenant :
- au moins une cible (41, 42) disposée sur un composant rotatif appartenant au projecteur (P₁), tel que l'organe de projection (2) ou l'un des moyens d'entraînement en rotation (7) ;
- un capteur (43) fixé dans le projecteur (P₁), le capteur (43) étant configuré pour détecter la ou chaque cible (41, 42), le capteur (43) étant équipé d'un câble de liaison (46) à une unité de traitement du signal distante ;
le projecteur (P₁) étant **caractérisé en ce qu'**il comprend en outre au moins une paroi (50) réalisée en matériau isolant et qui est venue de matière avec le corps (1) dont elle fait partie intégrante, la paroi (50) définissant un logement (51) entourant le capteur (43) et tout ou partie du câble de liaison (46) de façon à isoler électriquement la totalité du capteur (43) et tout ou partie du câble de liaison (46) par rapport aux éléments conducteurs (2.1, 6, 7, 8, 9, 22, 23).

2. Projecteur (P₁) selon la revendication 1, **caractérisé en ce que** le capteur (43) est séparé du volume (V) balayé par la cible (41, 42) en rotation par une distance de détection (H) s'étendant essentiellement parallèlement à l'axe de rotation (X₂).

3. Projecteur (P₁) selon l'une des revendications précédentes, **caractérisé en ce qu'**une portion (50X) de la paroi (50) s'étend, d'une part, en regard du capteur (43) et, d'autre part, en regard du volume (V) balayé par la cible (41, 42) en rotation, ladite portion (50X) de la paroi (50) étant disposée sensiblement axialement entre le capteur (43) et le volume (V) balayé par la cible (41, 42) en rotation.

4. Projecteur (P₁) selon la revendication 3, **caractérisé en ce que** ladite portion (50X) de la paroi (50) et le volume (V) balayé par la cible (41, 42) en rotation sont séparés par une distance axiale (G₁) comprise entre 1 mm et 10 mm.

5. Projecteur (P₁) selon l'une des revendications précédentes, **caractérisé en ce que** la paroi (50) a une épaisseur (E_{1,}, F₁) supérieure à 3 mm lorsque le potentiel de l'organe de projection (2) doit être élevé à plus de 50 kV.

6. Projecteur (P₁) selon l'une des revendications précédentes, **caractérisé en ce que** le logement (51) s'étend suivant une direction sensiblement parallèle à l'axe de rotation (X₂).

7. Projecteur (P₁) selon l'une des revendications précédentes, **caractérisé en ce que** le capteur (43) est sélectionné dans le groupe constitué d'un capteur magnétique, d'un capteur magnéto-résistif, d'un capteur à effet Hall, d'un capteur inductif, d'un capteur magnéto-inductif et d'un capteur capacitif.

8. Projecteur (P₁) selon l'une des revendications précédentes, **caractérisé en ce qu'**au moins un matériau formant la paroi (50) est sélectionné dans le groupe constitué du polyoxyméthylène copolymère (POM C), du polyéthylène téréphtalate (PETP), du polychlorure de vinyle (PVC), du polyéthylène (PE), du polypropylène (PP), du polyétheréthercétone (PEEK), du polytétrafluoréthylène (PTFE).

9. Projecteur (P₁) selon l'une des revendications précédentes, **caractérisé en ce que** les moyens d'entraînement en rotation (7) comprennent une turbine (7) munie d'une roue à aubes (11) et **en ce que** le composant rotatif est constitué de la roue à aubes (11), la ou chaque cible (41, 42) étant disposée sur une surface axiale de la roue à aubes (11).

10. Projecteur selon l'une des revendications précédentes, **caractérisé en ce que** la ou chaque cible est constituée d'une discontinuité de forme, telle qu'un creux ou un relief.

11. Projecteur (P₁) selon l'une des revendications précédentes, **caractérisé en ce que** la ou chaque cible (41, 42) est constituée d'une discontinuité de matière, la ou chaque cible (41, 42) comprenant par exemple une matière conductrice ou une matière magnétique.

12. Projecteur (P1) selon l'une des revendications précédentes, **caractérisé en ce que** la ou chaque cible (41, 42) est constituée d'une discontinuité de propriété physique.

## Patentansprüche

1. Sprühvorrichtung (P₁) für ein flüssiges oder pulverförmiges Beschichtungsprodukt auf elektrostatischem Wege, umfassend:
- einen elektrisch isolierenden Körper (1),
- ein im Verhältnis zum Körper (1) und um eine Rotationsachse (X₂) drehbares Sprühorgan (2) für das Beschichtungsprodukt,
- Drehantriebsmittel (7) für das Sprühorgan (2),
- Stromversorgungsmittel (26), die dazu eingerichtet sind, das Potenzial des Sprühorgans (2) auf Hochspannung zu erhöhen;
- Leiterelemente (2.1, 6, 8, 9, 22, 23, 33), die elektrisch mit den Stromversorgungsmitteln (26) verbunden sind und insbesondere zum Sprühorgan (2), zu den Drehantriebsmitteln (7) und zu den Stromversorgungsmitteln (26) gehören, wobei das Potenzial der Leiterelemente (2.1, 4, 6, 8, 9, 22, 23, 33) auf Hochspannung erhöhbar ist;
- eine Detektionsvorrichtung (40) zum Auswerten der Drehgeschwindigkeit des Sprühorgans (2), wobei die Detektionsvorrichtung (40) umfasst:
- wenigstens ein Ziel (41, 42), das auf einem drehbaren Bauteil angeordnet ist, das zur Sprühvorrichtung (P₁) gehört, wie z. B. das Sprühorgan (2) oder eines der Drehantriebsmittel (7);
- einen Sensor (43), der in der Sprühvorrichtung (P₁) angebracht ist, wobei der Sensor (43) dazu eingerichtet ist, das oder jedes Ziel (41, 42) zu erfassen, wobei der Sensor (43) mit einem Anschlusskabel (46) an eine Fernsignalverarbeitungseinheit versehen ist;
wobei die Sprühvorrichtung (P₁) **dadurch gekennzeichnet ist, dass** sie ferner wenigstens eine Wand (50) umfasst, die aus einem isolierenden Material besteht und einstückig mit dem Körper (1) ausgebildet ist, von dem sie einen integralen Teil bildet, wobei die Wand (50) eine Aufnahme (51) festlegt, die den Sensor (43) ebenso umgibt wie ganz oder teilweise das Anschlusskabel (46), um den Sensor (43) ganz und das Anschlusskabel (46) ganz oder teilweise gegenüber den Leiterelementen (2.1, 6,7, 8, 9, 22, 23) elektrisch zu isolieren.

2. Sprühvorrichtung (P₁) nach Anspruch 1, **dadurch gekennzeichnet, dass** der Sensor (43) von dem Volumen (V), das von dem Ziel (41, 42) bei dessen Drehung überstrichen wird, durch einen Detektionsabstand (H) getrennt ist, der im wesentlichen parallel zur Rotationsachse (X₂) verläuft.

3. Sprühvorrichtung (P₁) nach einem der vorhergehenden Ansprüche, **dadurch gekennzeichnet, dass** ein Abschnitt (50X) der Wand (50) einerseits gegenüber dem Sensor (43) und andererseits gegenüber dem von dem Ziel (41, 42) bei dessen Drehung überstrichenen Volumen (V) verläuft, wobei der Abschnitt (50X) der Wand (50) im Wesentlichen axial zwischen dem Sensor (43) und dem von dem Ziel (41, 42) bei dessen Drehung überstrichenen Volumen (V) angeordnet ist.

4. Sprühvorrichtung (P₁) nach Anspruch 3, **dadurch gekennzeichnet, dass** der Abschnitt (50X) der Wand (50) und das von dem Ziel (41, 42) bei dessen Drehung überstrichene Volumen (V) durch einen Axialabstand (G₁) voneinander getrennt sind, der im Bereich zwischen 1 mm und 10 mm liegt.

5. Sprühvorrichtung (P₁) nach einem der vorhergehenden Ansprüche, **dadurch gekennzeichnet, dass** die Wand (50) eine Dicke (E₁, F₁) von mehr als 3 mm aufweist, wenn das Potenzial des Sprühorgans (2) auf mehr als 50 kV erhöht werden muss.

6. Sprühvorrichtung (P₁) nach einem der vorhergehenden Ansprüche, **dadurch gekennzeichnet, dass** die Aufnahme (51) in einer Richtung im Wesentlichen parallel zur Rotationsachse (X₂) verläuft.

7. Sprühvorrichtung (P₁) nach einem der vorhergehenden Ansprüche, **dadurch gekennzeichnet, dass** der Sensor (43) aus der Gruppe ausgewählt ist, die aus einem Magnetsensor, einem Magnetwiderstandssensor, einem Hallsensor, einem Induktionssensor, einem Magnetinduktionssensor und einem kapazitiven Sensor besteht.

8. Sprühvorrichtung (P₁) nach einem der vorhergehenden Ansprüche, **dadurch gekennzeichnet, dass** wenigstens ein die Wand (50) bildendes Material aus der Gruppe ausgewählt ist, die aus einem Polyoxymethylen-Copolymer (POM C), Polyethylenterephthalat (PET), Polyvinylchlorid (PVC), Polyethylen (PE), Polypropylen (PP), Polyetheretherketon (PEEK) und Polytetrafluorethylen (PTFE) besteht.

9. Sprühvorrichtung (P₁) nach einem der vorhergehenden Ansprüche, **dadurch gekennzeichnet, dass** die Drehantriebsmittel (7) eine Turbine (7) umfassen, die mit einem Schaufelrad (11) versehen ist, und dass das drehbare Bauteil aus dem Schaufelrad (11) besteht, wobei das oder jedes Ziel (41, 42) auf einer Axialfläche des Schaufelrades (11) angeordnet ist.

10. Sprühvorrichtung nach einem der vorhergehenden Ansprüche, **dadurch gekennzeichnet, dass** das oder jedes Ziel durch eine Formdiskontinuität, wie eine Vertiefung oder eine Erhebung, gebildet ist.

11. Sprühvorrichtung (P₁) nach einem der vorhergehenden Ansprüche, **dadurch gekennzeichnet, dass** das oder jedes Ziel (41, 42) durch eine Materialdiskontinuität gebildet ist, wobei das oder jedes Ziel (41, 42) beispielsweise ein leitendes Material oder ein magnetisches Material umfasst.

12. Sprühvorrichtung (P₁) nach einem der vorhergehenden Ansprüche, **dadurch gekennzeichnet, dass** das oder jedes Ziel (41, 42) durch eine Diskontinuität physikalischer Eigenschaften gebildet ist.

## Claims

1. An atomizer (P₁) for electrostatically spraying coating material in liquid or in powder form, said atomizer comprising:
- an electrically insulating body (1);
- an atomizer member (2) for spraying coating material, which member is mounted to rotate relative to the body (1) and about an axis of rotation (X₂);
- rotary drive means (7) for driving the atomizer member (2) in rotation;
- electrical power supply means (26) arranged for raising the potential of the atomizer member (2) to high voltage;
- conductive elements (2, 1, 6, 8, 9, 22, 23, 33) that are electrically connected to the electrical power supply means (26) and that belong, in particular, to the atomizer member (2), to the rotary drive means (7), and to the electrical power supply means (26), the potential of the conductive elements (2.1, 4, 6, 8, 9, 22, 23, 33) being suitable for being raised to high voltage; and
- a detector device (40) for evaluating the speed of rotation of the atomizer member (2), the detector device (40) comprising:
- at least one target (41, 42) disposed on a rotary component belonging to the atomizer (P1; P2), such as the atomizer member (2) or one of the rotary drive means (7); and
- a sensor (43) fastened in the atomizer (P1; P2), the sensor (43) being configured to detect the or each target (41, 42), the sensor (43) being equipped with a link cable (46) for linking it to a remote processor unit for processing the signal;
said atomizer (P₁) being **characterized in that** it further comprises at least one wall (50; 150) made of an insulating material and which is formed integrally with the body, the wall (50; 150) defining a recess (51; 151) surrounding the sensor (43) and all or some part of the link cable (46) in a manner such as to insulate the entire sensor (43) and all or some part of the cable link (46) electrically from the conductive elements (2.1, 6, 7, 8, 9, 22, 23).

2. An atomizer (P₁) according to claim 1, **characterized in that** the sensor (43) is separated from the volume (V) swept by the rotating target (41, 42) by a detection distance (H) extending essentially parallel to the axis of rotation (X₂).

3. An atomizer (P₁) according to any preceding claim, **characterized in that** a portion (50X; 150X) of the wall (50; 150) extends facing the sensor (43) on one side and facing the volume (V) swept by the rotating target (41, 42) on the other side, said portion (50X; 150X) of the wall (50; 150) being disposed substantially axially between the sensor (43) and the volume (V) swept by the rotating target (41, 42).

4. An atomizer (P₁) according to claim 3, **characterized in that** said portion (50X; 150X) of the wall (50; 150) and the volume (V) swept by the rotating target (41, 42) are separated by an axial distance (G₁) lying in the range 1 mm to 10 mm.

5. An atomizer (P₁) according to any preceding claim, **characterized in that** the wall (50; 150) has a thickness (E₁, F₁) greater than 3 mm when the potential of the atomizer member (2) is to be raised to more than 50 kV.

6. An atomizer (P₁) according to any preceding claim, **characterized in that** the recess (51; 151) extends in a direction that is substantially parallel to the axis of rotation (X₂).

7. An atomizer (P₁) according to any preceding claim, **characterized in that** the sensor (43) is selected from among the group comprising a magnetic sensor, a magnetoresistive sensor, a Hall-effect sensor, an inductive sensor, a magneto-inductive sensor, and a capacitive sensor.

8. An atomizer (P₁) according to any preceding claim, **characterized in that** at least one material forming the wall (50; 150) is selected from among the group comprising: polyoxymethylene copolymer (POM C), polyethylene terephthalate (PETP), polyvinyl chloride (PVC), polyethylene (PE), polypropylene (PP), polyetheretherketone (PEEK), and polytetrafluoroethylene (PTFE).

9. An atomizer (P₁) according to any preceding claim, **characterized in that** the rotary drive means (7) comprise a turbine (7) provided with a bladed wheel (11), and **in that** the rotary component is constituted by the bladed wheel (11), the or each target (41, 42) being disposed on an axial surface of the bladed wheel (11).

10. An atomizer according to any preceding claim, **characterized in that** the or each target is constituted by a shape discontinuity, such as an indented or projecting piece in relief.

11. An atomizer (P₁) according to any preceding claim, **characterized in that** the or each target (41; 42) is constituted by a material discontinuity, the or each target (41, 42) comprising, for example, a conductive material or a magnetic material.

12. An atomizer (P1) according to any preceding claim, **characterized in that** the or each target (41, 42) is constituted by a physical property discontinuity.
